(19) **Europäisches Patentamt / European Patent Office / Office européen des brevets**

(11) **EP 1 370 983 B1**

(12) **EUROPEAN PATENT SPECIFICATION**

(45) Date of publication and mention of the grant of the patent:
**11.07.2007 Bulletin 2007/28**

(51) Int Cl.:
**G06F 17/30** (2006.01)

(21) Application number: **02705990.6**

(22) Date of filing: **25.01.2002**

(86) International application number:
**PCT/US2002/002278**

(87) International publication number:
**WO 2002/077870 (03.10.2002 Gazette 2002/40)**

(54) **IMAGE RETRIEVAL USING DISTANCE MEASURE**

BILDSUCHE UNTER VERWENDUNG EINES ENTFERNUNGSMASSES

RECHERCHE D'UNE IMAGE PAR MESURE DE DISTANCES

(84) Designated Contracting States:
**AT BE CH CY DE DK ES FI FR GB GR IE IT LI LU MC NL PT SE TR**

(30) Priority: **23.03.2001 US 817000**

(43) Date of publication of application:
**17.12.2003 Bulletin 2003/51**

(73) Proprietor: **INTEL CORPORATION**
**Santa Clara, CA 95052 (US)**

(72) Inventors:
- **ACHARYA, Tinku**
  **Chandler, AZ 85226 (US)**
- **BHATTACHARYA, Bhargab,**
  **c/o Indean Statistical Ins.**
  **Calcutta, India 700035 (IN)**
- **KUNDU, Malay,**
  **c/o Indian Statistical Institute**
  **Calcutta, India 700035 (IN)**
- **MURTHY, C.,**
  **c/o Indian Statistical Institute**
  **Calcutta, India 700035 (IN)**
- **BISHNU, Arijit,**
  **c/o Indian Statistical Institute**
  **Calcutta, India 700035 (IN)**

(74) Representative: **Jacoby, Georg et al**
**Samson & Partner,**
**Widenmayerstrasse 5**
**80538 München (DE)**

(56) References cited:
**US-A- 5 642 431         US-A- 6 104 833**

- **KATO N ET AL: "A HANDWRITTEN CHARACTER RECOGNITION SYSTEM USING DIRECTIONAL ELEMENT FEATURE AND ASYMMETRIC MAHALANOBIS DISTANCE" IEEE TRANSACTIONS ON PATTERN ANALYSIS AND MACHINE INTELLIGENCE, IEEE INC. NEW YORK, US, vol. 21, no. 3, March 1999 (1999-03), pages 258-262, XP000833461 ISSN: 0162-8828**
- **KATO N ET AL: "A HANDWRITTEN CHARACTER RECOGNITION SYSTEM USING MODIFIED MAHALANOBIS DISTANCE" SYSTEMS & COMPUTERS IN JAPAN, SCRIPTA TECHNICA JOURNALS. NEW YORK, US, vol. 28, no. 1, 1997, pages 46-54, XP000692719 ISSN: 0882-1666**
- **KAPOOR S ET AL: "New techniques for exact and approximate dynamic closest-point problems" PROCEEDINGS OF THE TENTH ANNUAL SYMPOSIUM ON COMPUTATIONAL GEOMETRY, 10TH SYMPOSIUM ON COMPUTATIONAL GEOMETRY, STONY BROOK, NY, USA, 6-8 JUNE 1994, pages 165-174, XP002224694 1994, New York, NY, USA, ACM Press, USA ISBN: 0-89791-648-4**
- **FLICKNER M ET AL: "QUERY BY IMAGE AND VIDEO CONTENT: THE QBIC SYSTEM" COMPUTER, IEEE COMPUTER SOCIETY, LONG BEACH., CA, US, US, vol. 28, no. 9, 1 September 1995 (1995-09-01), pages 23-32, XP000673841 ISSN: 0018-9162**
- **NIBLACK W ET AL: "THE QBIC PROJECT: QUERYING IMAGES BY CONTENT USING COLOR, TEXTURE, AND SHAPE" PROCEEDINGS OF THE SPIE, SPIE, BELLINGHAM, VA, US, vol. 1908, 1993, pages 173-187, XP000564731**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**(Cont. next page)**

• DE MAESSCHALCK R ET AL: "The Mahalanobis distance" CHEMOMETRICS AND INTELLIGEMT LABORATORY SYSTEMS, ELSEVIER SCIENCE PUBLISHERS, AMSTERDAM, NL, vol. 50, no. 1, January 2000 (2000-01), pages 1-18, XP004184173 ISSN: 0169-7439

• DEY S. ET AL: 'A fast algorithm for computing the Euler number of an image and its VLSI implementation' THIRTEENTH INTERNATIONAL CONFERENCE ON VLSI DESIGN, IEEE 03 January 2000, INDIA, pages 330 - 335, XP010365888

**Description**

Background

This invention relates to image processing and, more particularly, to the characterization of images.

Image processing refers to the analysis and manipulation of images using a computer. The discipline encompasses a wide array of techniques, including pattern recognition and other image analysis, compression and encoding, such as image transmission, and image construction, to name but a few examples. Image processing is used in diverse fields such as astronomy, medicine, military operations, communications, geology, meteorology and so on.

Although visual in nature, images may be characterized so that a computer or other processor-based system may also "see" the image or, for example, distinguish the image from other images. Identifying the moment, entropy, center of mass, orientation, or other histogram-based features is one approach to image characterization. Structural and syntactic features of the image may serve as characteristic parameters. Geometric indicia, such as perimeter, area, eccentricity, or Euler number, may numerically identify the image.

Because images are often perturbed, such as during transmission, the characteristic parameters of the image are ideally invariant following transformations. Image transformations may include translation, rotation, scaling, shearing, compression, inclusion of noise, and so on.

Particularly in the emerging domain of Internet technology, image searching may be an important tool. Different characteristics of the images, used for image searching, may have widely varying results, however. This type of image searching is known as content-based image retrieval.

One technique for retrieving images from a database of images is to associate each image with a certain number of features. Using feature vectors, each image, represented by its feature values, is mapped to a point in an n-dimensional feature space, where there are n features identified. A similarity query is then used to retrieve the images lying in a neighborhood close to the query image.

In executing these similarity queries, the precision of obtaining the image may be offset by the size of the image database and the time to calculate the various features involved in the similarity query.

Kato et al. describe in "A handwritten character recognition system using directional element feature and asymmetric Mahalanobis distance", IEEE transactions on pattern analysis and machine intelligence, IEEE Inc. New York, US, vol. 21, no.3, 1999-03, pages 258-262, a recognition system for chinese or japanese characters. A directional feature vector of a query character image is calculated by extracting information about its contours and dot orientation and compared with the directional feature vectors of character images stored in a database. First, a rough classification using the city block distance is performed, which singles out a few candidates from the great number of possible characters. Afterwards, a fine classification based on an asymmetric Mahalanobis distance is carried out.

Further, Kato et al. disclose in "A handwritten character recognition system using modified Mahalanobis distance", Systems&computers in Japan, Scripta technical journals, New York, US, vol.28, no.1, 1997, pages 46-54, a system similar to that described in the last paragraph in an earlier stage of development. Comparative measurements are performed to find out the best distance function for character recognition. For the chosen circumstances, the Mahalanobis distance proves to be the best evaluation function.

Kapoor et al. provide in "New techniques for exact and approximate dynamic closest-point problems", Proceedings of the tenth annual symposium on computational geometry, Stony Brook, NY, USA, 6-8 June 1994, pages 165-174, a theoretical basis for new techniques for solving closest-point problems using range trees.

Flickner et al. propose in "Query by image and video content: The QBIC system" Computer, IEEE Computer Society, Long Beach, CA, US, vol.28, no. 9, 1995-09-01, pages 23-32, a system which allows image queries on large databases. The images are described by certain characteristic features derived from colours, textures, shapes etc. which are stored in a database. The query image features can be compared with the stored features of the example images by means of distance functions.

Niblack et al. explain the last-mentioned system in "The QBIC project: Qerying images by content using color, texture, and shape", Proceedings of the Spie, Spie, Bellingham, VA, US, vol. 1908, 1993, pages 173-187, in more detail and identifies the distance functions used for comparing the images. Depending on the chosen features, either the Euclidean distance or edge matching algorithms are applied.

De Maesschalck et al. examine and interpret the Mahalanobis distance in relation to the Euclidean distance in "The Mahalanobis distance", Chemometrics and intelligent laboratory systems, Elsevier Science Publishers, Amsterdam, NL, vol.50, 2000-01, pages 1-18.

US-A-6104833 again discloses a character recognition apparatus. A query pattern and different prototype characters are each characterised by two predetermined features. In some cases, the Euler number of an image may be used to determine if an image is a candidate to match a query. The distance between the feature vectors is calculated, for example using the city block distance function, and it is therefrom decided which character is represented by the query pattern.

Dey et al. provide in "A fast algorithm for computing the Euler number of an image and its VLSI implementation", Thirteenth international conference on VLSI design, IEEE, 2000-01-03, to 2000-01-07, pages 330-335, an algorithm for computing the Euler number of a binary image.

US-A-5642431 describes a system for detecting human faces in images. It includes a processor which determines a distance metric between a preprocessed query image and different prototype images. The distance metric may contain two components, one based on a Mahalanobis distance, the other based on a Euclidean distance.

Thus, there is a continuing need for optimizing image retrieval methods.

The invention solves this problem by a method, system and computer program according to the independent claims. The dependent claims refer to preferred embodiments of the invention.

Brief Description of the Drawings

Figure 1 is a block diagram of a binary image according to one embodiment of the invention;

Figure 2 is a block diagram of a 4- and 8-neighborhood according to one embodiment of the invention;

Figure 3 is a block diagram of a gray-tone image according to one embodiment of the invention;

Figures 4A through 4D are binary images of the gray-tone image of Figure 3 according to one embodiment of the invention;

Figures 5A through 5D are reflected gray code representations of the gray-tone image of Figure 3 according to one embodiment of the invention;

Figure 6 is a block diagram of a system according to one embodiment of the invention;

Figure 7 is a flow diagram for calculating a variance-covariance matrix for plural images of the system of Figure 6 according to one embodiment of the invention; and

Figure 8 is a flow diagram for calculating the Mahalanobis distance between a query image and plural images of the system of Figure 6 according to one embodiment of the invention.

Detailed Description

Euler Number

**[0020]** To retrieve an image from a database of images, each image may be characterized to distinguish it from the other images. For example, the image may be characterized numerically.

For example, each binary image of a database of binary images may be assigned an Euler number. An Euler number of a binary image is the difference between the number of connected components (objects) in the image and the number of holes in the image.

The Euler number is a topological feature of the binary image. The Euler number remains invariant under translation, rotation, scaling and rubber-sheet transformation of the binary image.

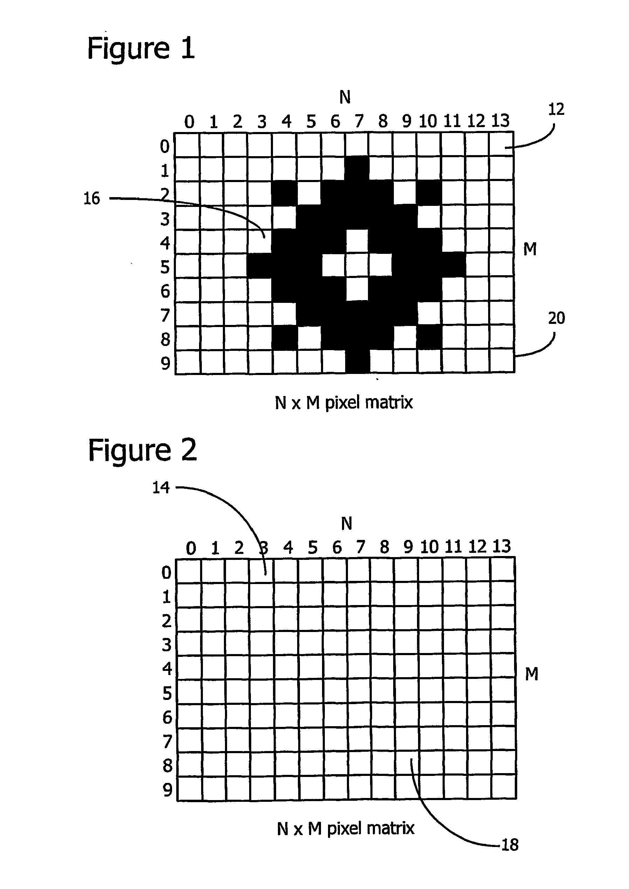

A binary image 16 may be represented in an $N \times M$ pixel matrix 20, in which an object pixel 12 is shaded, to indicate a binary value of 1, while a background pixel 12 is unshaded, to indicate a binary value of 0, as depicted in Figure 1. Within the $N \times M$ pixel matrix 20, a connected component is a set of object pixels such that any object pixel 12 in the set is in the eight (or four) neighborhood of at least one object pixel 12 of the same set. Both a 4-neighborhood 14 and an 8-neighborhood 18 are depicted in Figure 2.

In addition to connected components in the binary image, in one embodiment, a hole is defined as a set of background pixels, such that any background pixel in the set is in the 4 (or eight) neighborhood of at least one background pixel of the same set and this entire set of background pixels is enclosed by a connected component.

A run of the $i^{th}$ column (or row) of the pixel matrix 20 is defined to be a maximal sequence of consecutive ones in the $i^{th}$ column (or row). Two runs appearing in two adjacent columns (rows) each are said to be neighboring if at least one pixel of a run is in the eight (or four) neighborhood of a pixel of the other run.

If the binary image 16, known as I, consists of a single row (column) i, the Euler number E(I) of the image 16 is the same as the number of runs, denoted as R(i), of the image 16, as shown by the following formula:

$$E(I) = R(i)$$

However, where the binary image 16 consists of multiple rows (columns), the binary image, I, may be divided into partial images, $I_i$. Further, the Euler number of the entire image can be found using the following relations:

$$E(I) = E(I_1 \cup I_2) = E(I_1) + E(I_2) - E(I_1 \cap I_2),$$

and

$$E(I_{i-1} \cap I_i) = O_i$$

where $O_i$ equals the number of neighboring runs between two consecutive rows (columns), e.g., the $(i-1)^{th}$ and the $i^{th}$ rows (columns).

According to one embodiment, the Euler number of a binary image is defined as the difference between the sum of the number of runs for all rows (columns) and the sum of the neighboring runs between all consecutive pairs of rows (columns) of the N x M pixel matrix. Stated mathematically:

$$E(I_N) = \sum_{i=1}^{N} R(i) - \sum_{i=2}^{N} O_i$$

where $I_N = I$ denotes the entire image. Thus, by knowing the number of runs and the number of neighboring runs in the binary image, I, the Euler number, E(I) may be computed.

Euler Vector

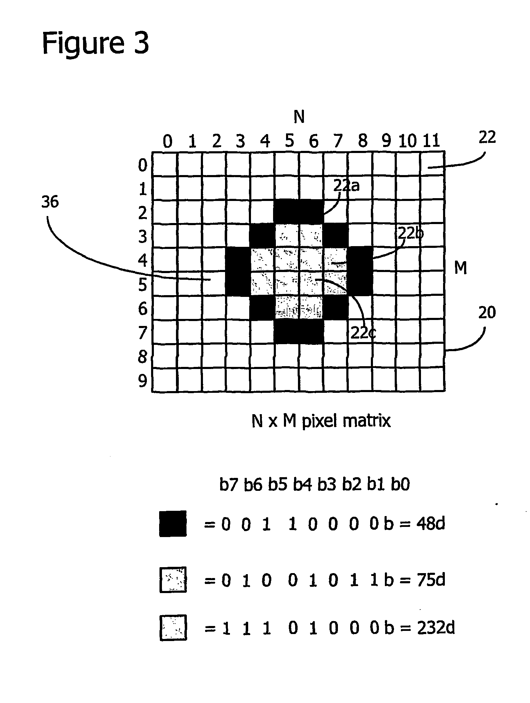

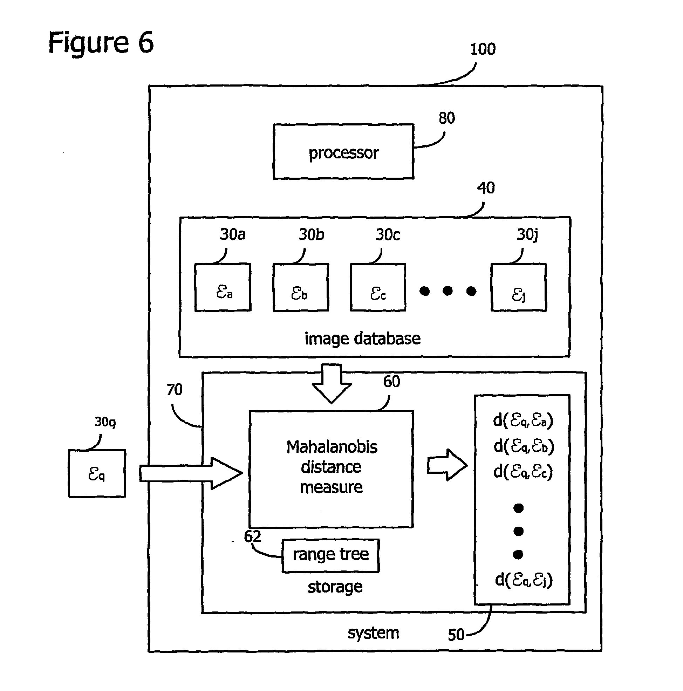

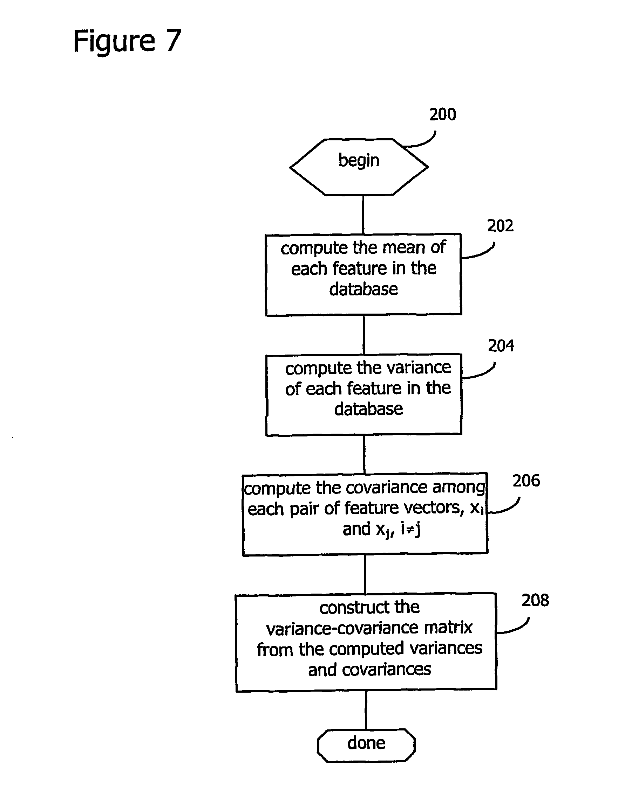

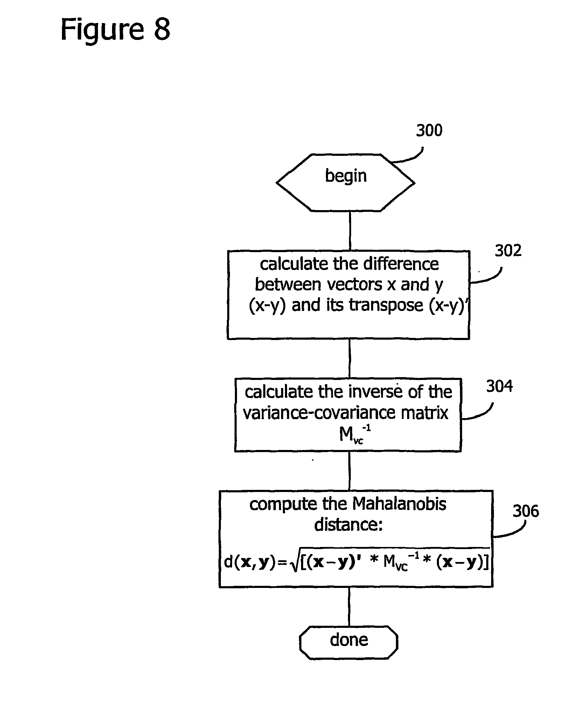

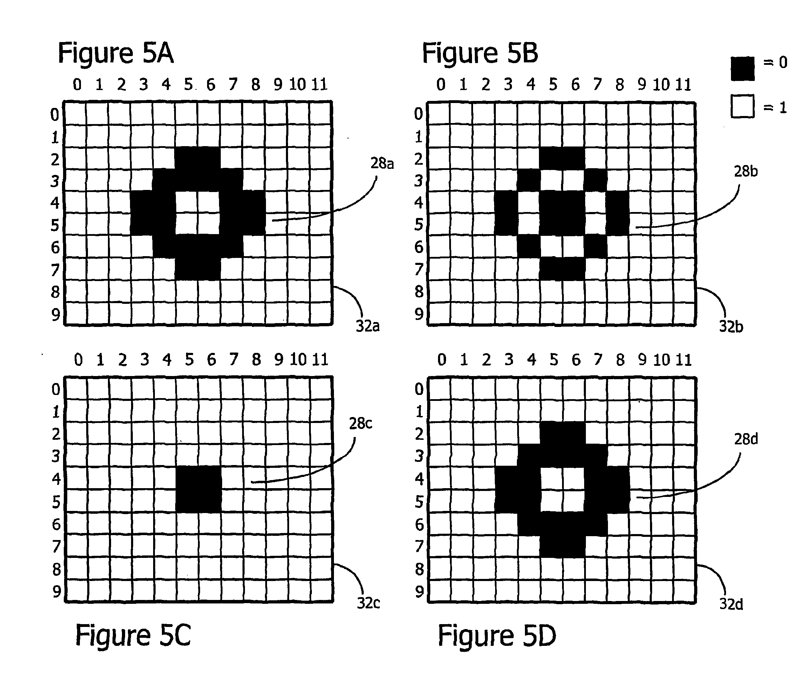

The Euler number for binary images may be extended to gray-tone images. For example, as depicted in Figure 3, a gray-tone image 36 may be represented in an N × M matrix in which each element 22 is an integer between 0 and 255 decimal denoting the intensity of the corresponding pixel. The intensity value of each element may be represented by an 8-bit binary vector ($b_7$, $b_6$, $b_5$, $b_4$, $b_3$, $b_2$, $b_1$, $b_0$). The gray-tone image 36 thus comprises eight bit planes, or eight distinct binary images.

The hypothetical gray-tone image 36 includes three 8-bit pixels 22a, 22b, and 22c, each of which represents a distinct intensity value, as shown.

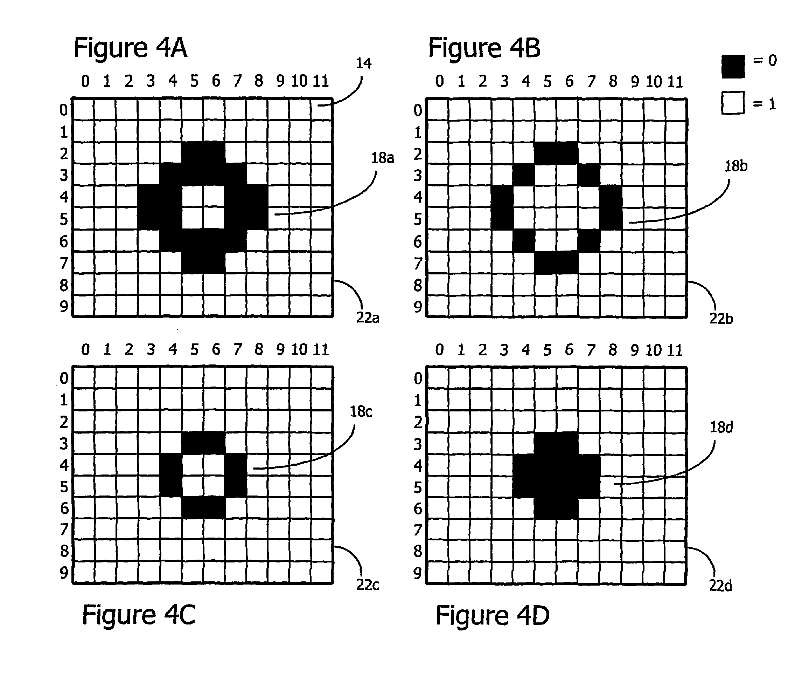

In one embodiment, the first four most significant bit planes ($b_7$, $b_6$, $b_5$, and $b_4$) of the 8-bit binary vector are retained. In essence, four binary images are retained. In Figures 4A-4D, the four binary images 18a-18d are depicted, representing the four most significant bit planes of the gray-tone image 36 of Figure 3. An Euler number may be computed for each binary image 18a-18d.

In one embodiment, before computing the Euler number for each binary image 18, the four-bit binary vector ($b_7$, $b_6$, $b_5$, $b_4$), is converted to its corresponding reflected gray code vector ($g_7$, $g_6$, $g_5$, $g_4$), in which:

$g_7 = b_7$
$g_6 = b_7 \oplus b_6$
$g_5 = b_6 \oplus b_5$
$g_4 = b_5 \oplus b_4$

where $\oplus$ denotes XOR (modulo-2) operation. The result of the reflected gray code conversion is depicted in binary images 28a through 28d of Figures 5A-5D, respectively, according to one embodiment. It is well-known that for any binary vector, the corresponding reflected gray code is unique and vice-versa.

Accordingly, in one embodiment, the Euler vector, $\xi_K$ of the original gray-tone image, K, is a 4-tuple ($E_7$, $E_6$, $E_5$, $E_4$), where $E_i$ is the Euler number of the partial binary image, $g_i$, formed by the $i^{th}$ bit plane, $4 \leq i \leq 7$, corresponding to the reflected gray code representation of intensity values.

Thus, in addition to calculating an Euler number for a binary image, an Euler vector for a gray-tone image may be calculated by considering the four most significant binary bit planes of the image, converting the 4-bit binary vector to its corresponding reflected gray code, and computing the Euler number for each reflected gray code representation.

In characterizing gray-tone images using Euler vectors, the elements of the Euler vector have, in some cases, a decreasing order of importance. That is, element $E_7$ is most significant in characterizing the image, next is $E_6$, and so on. Further, the ranges and the variances of various elements of the Euler vector widely differ. In such an environment, the Mahalanobis distance may be adopted to provide a measure that captures the similarity and dissimilarity of properties for features of a set of images.

Mahalanobis Distance

The Euler number $E_i$, may thus characterize a binary image. By extension, an Euler vector $\xi_i$, including four Euler numbers, $E_7$, $E_6$, $E_5$, and $E_4$, may characterize a gray-tone image. Each Euler number $E_i$, may be described as a "feature" of the gray-tone image, according to one embodiment. In one embodiment, Euler vector characterization may form a basis for image retrieval.

Suppose an Euler vector, $\xi_K$, describes features for each gray-tone image, K, in an image database. A new image, q, having features defined by Euler vector $\xi_q$, is to be retrieved from the image database. The newly received image, q, may be compared to each of the images in the image database. Once a match is found, image retrieval is complete.

One way to compare two things is to measure a distance between them. Distance measurement may be performed between scalars, such as numbers, but also may be performed between vectors. Where an image is described using a vector, the distance between the vector and a second image having its own vector may be computed. Accordingly, the distance between the two images may be computed.

Suppose the query image 30q is not found in the image database 40. Rather than comparing for an exact match, in one embodiment, a distance measure between the query image 30q and other images in the database may be taken. One distance measure is known as a Mahalanobis distance measure. The Mahalanobis distance measure calculates the "distance" between the query image 30q and the other images in the database, then ranks the distance results. The smallest distance result is the "match."

The Mahalanobis distance measure operation is depicted in Figure 6, according to one embodiment. A system 100 includes a processor 80, an image database 40 and a Mahalanobis distance measure 60. The image database 40 includes multiple images 30, in which each has an associated Euler vector, $\xi_K$. The Mahalanobis distance measure 60 receives each of the images 30 from the image database 40, and compares them to a query image 30q, which includes its own Euler vector, $\xi_q$. In one embodiment, the Mahalanobis distance measure 60 is a software program, executable by the processor 80, for performing Mahalanobis distance measurements between the query image 30q and one or more images 30 from the image database 40.

A result table 50, according to one embodiment, includes distance calculations as between the query image 30q and one or more images 30 in the image database 40. In one embodiment, the distance results are ranked according to their size. Thus, the first (or last) entry in the result table 50 is the "match" of the distance calculation.

Each of the images 30 in the image database 40 may be classified or described according to the Euler vector, $\xi_K$. The elements of the Euler vector, or Euler numbers, $E_7$, $E_6$, $E_5$, and $E_4$, represent features of the gray-tone image 30 they classify. Conventionally, distance measures between two vectors may be used to capture the "Closeness" of the two vectors. For example, the Euclidean distance between vectors x and y, where x has four elements, $x_1$, $x_2$, $x_3$, and $x_4$ and y likewise has four elements, $y_1$, $y_2$, $y_3$, and $y_4$ is given by the following equation:

$$d(x,y) = \sqrt{[(x_1 - y_1)^2 + (x_2 - y_2)^2 + (x_3 - y_3)^2 + (x_4 - y_4)^2]}$$

For some phenomena, the Euclidean distance does not provide a very good distance measure. Recall that when characterizing gray-tone images by an Euler vector, the elements of the vector have a decreasing level of importance. That is, $E_7$ is more important in characterizing the gray-tone image 30 than $E_6$; $E_6$ is more important in characterizing the image 30 than $E_5$; and so on.

Further, the ranges and the variances of the elements ($E_7$, $E_6$, $E_5$, and $E_4$) of the vector widely differ in their magnitudes. In such an environment, the Mahalanobis distance may provide a better measure than the Euclidean distance for capturing the similarity/dissimilarity properties between the images 30 of the database 40.

The Mahalanobis distance between two vectors, x and y, may be derived from the following equation:

$$d(\mathbf{x},\mathbf{y}) = \sqrt{[(\mathbf{x} - \mathbf{y})' * M_{VC}^{-1} * (\mathbf{x} - \mathbf{y})]}$$

where ' represents matrix transposition. $M_{VC}$ is the variance-covariance matrix formed by the image feature vectors: $\mathbf{x}' = (x_1, x_2, ..., x_N)$ and $\mathbf{y}' = (y_1, y_2, ..., y_N)$. Here, $(\mathbf{x} - \mathbf{y})'$ is a $(1 \times n)$ matrix, $M_{VC}^{-1}$ is an $(n \times n)$ matrix, and $(\mathbf{x} - \mathbf{y})$ is an $(n \times 1)$ matrix; hence their product is a scalar.

The variance-covariance matrix of x, denoted as $M_{VC}$, is an $N \times N$ matrix given by:

$$M_{VC} (i, j) = \text{variance of the } i^{th} \text{ feature } x_i, \text{ if } i = j;$$

$$= \text{covariance of the } i^{th} \text{ variable } x_i \text{ and jth variable } x_j \text{ if } i \neq j$$

Note that $M_{VC}(i, j) = M_{VC}(j, i)$. The variance-covariance matrix of **x** is also known as a dispersion matrix.

To compute the variance-covariance matrix of image feature vectors, both the variance and the covariance are computed. The variance of a feature, $x_i$, is defined as:

$$\text{Variance} (x_i) = \delta_{xi}^{2} = \left[ \Sigma_{k=1}^{L} (x_{ik} - \text{mean} (x_i))^2 \right] / L$$

where L is the number of the observations of the variable (feature) $x_i$.

The features of a gray-tone image may also be correlated. The measure of the correlation between any two features is known as covariance. Covariance is defined as follows:

$$\text{Covariance} (x_i, x_j) = \text{cov} (x_i, x_j) = [\Sigma_{k=1}^{L} (x_{ik} - \text{mean} (x_i))(x_{jk} - \text{mean} (x_j))] / L$$

Once the variance and covariance values are determined, the variance-covariance matrix, $M_{VC}$, may be computed. The variance-covariance matrix, $M_{VC}$, looks like:

$$M_{VC} = \begin{vmatrix} \delta_{x1}^{2} & \text{cov}(x_2, x_1) & \text{cov}(x_3, x_1) & \cdots & \text{cov}(x_n, x_1) \\ \text{cov}(x_1, x_2) & \delta_{x2}^{2} & \text{cov}(x_3, x_2) & \cdots & \text{cov}(x_n, x_3) \\ \text{cov}(x_1, x_3) & \text{cov}(x_2, x_3) & \delta_{x3}^{2} & \cdots & \text{cov}(x_n, x_3) \\ & & \cdot & & \\ & & \cdot & & \\ & & \cdot & & \\ \text{cov}(x_1, x_{(n-1)}) & \text{cov}(x_2, x_{(n-1)}) & \text{cov}(x_3, x_{(n-1)}) & \cdots & \text{cov}(x_n, x_{(n-1)}) \\ \text{cov}(x_1, x_n) & \text{cov}(x_2, x_n) & \text{cov}(x_3, x_n) & \cdots & \delta_{xn}^{2} \end{vmatrix}$$

In Figure 7, the variance-covariance matrix, $M_{VC}$, for a database of images 30, is computed according to one embodiment. To illustrate, assume the image database 40 includes images 30 in which each image $30_K$ has an associated Euler vector, $\xi_K$. Each Euler vector, $\xi_K$ includes Euler numbers $E_{K7}$, $E_{K6}$, $E_{K5}$, and $E_{K4}$, which constitute "features" of the image $30_K$.

The variance-covariance matrix may be computed for all the images 30 of the database 40. Subsequently, a query image 30q may be received by the system 100, as depicted in Figure 6. Once the variance-covariance matrix, $M_{VC}$, is calculated, image queries may quickly retrieved desired images.

In one embodiment, the Mahalanobis distance measure 60 computes the mean (or average) of each feature of the image database 40 (block 202). Because the Euler vector, $\xi_K$, includes four features, Euler numbers $E_7$-$E_4$, four mean calculations are computed, as follows:

$$\mu_{E7} = (E_{a7} + E_{b7} + E_{c7} + \ldots + E_{j7})/j$$

$$\mu_{E6} = (E_{a6} + E_{b6} + E_{c6} + \ldots + E_{j6})/j$$

$$\mu_{E5} = (E_{a5} + E_{b5} + E_{c5} + ... + E_{j5})/j$$

$$\mu_{E4} = (E_{a4} + E_{b4} + E_{c4} + ... + E_{j4})/j$$

where j is the number of images in the image database 40.

The features of each image 30 in the database 40 may be correlated. The measure of the correlation between any two features is reflected in the covariance equation, defined above. Accordingly, in one embodiment, the covariance between features of the images 30 is calculated (block 206). For example, in the illustrated database 40, the following covariance equations may be computed:

$$cov(E_7, E_6) = cov(E_6, E_7) = [(E_{a7} - \mu_{E7})(E_{a6} - \mu_{E6}) + (E_{b7} - \mu_{E7})(E_{b6} - \mu_{E6}) + (E_{c7} - \mu_{E7})(E_{c6} - \mu_{E6}) + ... + (E_{j7} - \mu_{E7})(E_{j6} - \mu_{E6})]/j$$

$$cov(E_7, E_5) = cov(E_5, E_7) = [(E_{a7} - \mu_{E7})(E_{a5} - \mu_{E5}) + (E_{b7} - \mu_{E7})(E_{b5} - \mu_{E5}) + (E_{c7} - \mu_{E7})(E_{c5} - \mu_{E5}) + ... + (E_{j7} - \mu_{E7})(E_{j5} - \mu_{E5})]/j$$

$$cov(E_7, E_4) = cov(E_4, E_7) = [(E_{a7} - \mu_{E7})(E_{a4} - \mu_{E4}) + (E_{b7} - \mu_{E7})(E_{b4} - \mu_{E4}) + (E_{c7} - \mu_{E7})(E_{c4} - \mu_{E4}) + ... + (E_{j7} - \mu_{E7})(E_{j4} - \mu_{E4})]/j$$

$$cov(E_6, E_5) = cov(E_5, E_6) = [(E_{a6} - \mu_{E6})(E_{a5} - \mu_{E5}) + (E_{b6} - \mu_{E6})(E_{b5} - \mu_{E5}) + (E_{c6} - \mu_{E6})(E_{c5} - \mu_{E5}) + ... + (E_{j6} - \mu_{E6})(E_{j5} - \mu_{E5})]/j$$

$$cov(E_6, E_4) = cov(E_4, E_6) = [(E_{a6} - \mu_{E6})(E_{a4} - \mu_{E4}) + (E_{b6} - \mu_{E6})(E_{b4} - \mu_{E4}) + (E_{c6} - \mu_{E6})(E_{c4} - \mu_{E4}) + ... + (E_{j6} - \mu_{E6})(E_{j4} - \mu_{E4})]/j$$

$$cov(E_5, E_4) = cov(E_4, E_5) = [(E_{a5} - \mu_{E5})(E_{a4} - \mu_{E4}) + (E_{b5} - \mu_{E5})(E_{b4} - \mu_{E4}) + (E_{c5} - \mu_{E5})(E_{c4} - \mu_{E4}) + ... + (E_{j5} - \mu_{E5})(E_{j4} - \mu_{E4})]/j$$

The covariance is computed as between Euler numbers $E_7$ and $E_6$, $E_7$ and $E_5$, $E_7$ and $E_4$, $E_6$ and $E_5$, $E_6$ and $E_4$, and $E_5$ and $E_4$. The covariance is associative. Thus, $cov(E_7, E_6)=cov(E_6, E_7)$, and so on.

Now that the variance and covariance are known for the features E7, E6, E5, and E4 of the image database 40, the variance-covariance matrix $M_{VC}$ may be computed according to one embodiment (block 208). For a database of images characterized using Euler vectors, $\xi_K$, the variance-covariance matrix $M_{VC}$ looks like:

$$M_{VC} = \begin{vmatrix} \delta_{E7}^{2} & cov(E_6, E_7) & cov(E_5, E_7) & cov(E_4, E_7) \\ cov(E_7, E_6) & \delta_{E6}^{2} & cov(E_5, E_6) & cov(E_4, E_6) \\ cov(E_7, E_5) & cov(E_6, E_5) & \delta_{E5}^{2} & cov(E_4, E_5) \\ cov(E_7, E_4) & cov(E_6, E_4) & cov(E_5, E_4) & \delta_{E4}^{2} \end{vmatrix}$$

Computation of the variance-covariance matrix, according to Figure 7, is thus complete.

Once the variance-covariance matrix, $M_{VC}$, is known, the Mahalanobis distance may be measured between a query image 30q and one or more images 30 in the image database 40.

In one embodiment, the Mahalanobis distance is computed according to the flow diagram of Figure 8 (block 302). First, a difference between two vectors is calculated. Each vector includes feature information for a given image 30. For example, where the Mahalanobis distance is sought between the query image 30q and the image 30a of the image database 40, the difference between the Euler vectors $\xi_q$ and $\xi_a$ is calculated. The difference between $\xi_q$ and $\xi_a$ is:

$$(\xi_q - \xi_a) = \begin{vmatrix} (E_{q7} - E_{a7}) \\ (E_{q6} - E_{a6}) \\ (E_{q5} - E_{a5}) \\ (E_{q4} - E_{a4}) \end{vmatrix}$$

Likewise, the transpose $(\xi_q - \xi_a)'$ is as follows:

$$(\xi_q - \xi_a)' = [(E_{q7} - E_{a7}), (E_{q6} - E_{a6}), (E_{q5} - E_{a5}), (E_{q4} - E_{a4})]$$

Additionally, to compute the Mahalanobis distance between image 30q and any of the images 30 in the image database 40, the inverse of the variance-covariance matrix, $M_{VC}$, or $M_{VC}^{-1}$, is calculated (block 304). The inverse of the matrix $M_{VC}$ is calculated according to known principles.

From these operations, the Mahalanobis distance may be calculated (block 306). For example, using the query image 30q, the Mahalanobis distance may be calculated between the query image 30q and one or more of the images 30 in the image database 40, as follows:

$$d(\xi_q, \xi_a) = (\xi_q - \xi_a)' * M_{VC}^{-1} * (\xi_q - \xi_a)$$

$$d(\xi_q, \xi_b) = (\xi_q - \xi_b)' * M_{VC}^{-1} * (\xi_q - \xi_b)$$

$$d(\xi_q, \xi_c) = (\xi_q - \xi_c)' * M_{VC}^{-1} * (\xi_q - \xi_c)$$

$$\vdots$$

$$d(\xi_q, \xi_j) = (\xi_q - \xi_j)' * M_{VC}^{-1} * (\xi_q - \xi_j)$$

In one embodiment, the Mahalanobis distance measure 60 ranks the distance calculations in order from smallest to largest. Accordingly, the first entry into the result table 50 is the closest match for the query image 30q. In one embodiment, using the Euler vector as the representative image feature and the Mahalanobis distance as the closeness measure, the desired image is found to lie at minimum distance. Noisy and compressed versions of the query image 30q have next higher rank in the result table 50.

In some embodiments, the various features used to characterize the images 30 may not be equally important for retrieval. In such a case the elements of the variance-covariance matrix, $M_{VC}$, may be multiplied by a suitable weight factor according to the importance of the corresponding feature.

For very large databases, computing the distance from the query image 30q to all other images 30 in the database 40 may take substantial time. Thus, ranking and, in turn, retrieval, may be undesirably slow. To obviate the problem, multi-dimensional search techniques may be employed to retrieve a subset of images lying in the neighborhood of the query image 30q in the feature space. Ranking according to the proposed distance measure may then be performed on this subset only.

Range Trees

There are many techniques available for finding an item in a database. A sequential search of the database may occur, a hash table may be used and binary search techniques may be employed, as examples. A binary tree is a data structure used for storage, removal, and searching of items in a data set. With respect to the images 30 in the image database 40, it is desirable to find the image 30 that is similar to the query image 30q without searching all j of the images in the database 40.

In one embodiment, a multi-dimensional search tree is thus used for storing the images 30. The multi-dimensional search tree permits efficient retrieval of the images 30.

In one embodiment, images are stored in the binary tree at random. Sometimes, however, the data is not inserted into the binary tree in random order. The performance of a binary search, therefore, may be less than optimal. The binary tree may be "rebalanced" after each insertion or deletion of data. During rebalancing operations, the nodes of the binary tree are rearranged using rotations. Typically, these rotations minimize the height of the binary tree.

One type of binary tree is known as an AVL tree (named for its creators Adelson-Velskii and Landis). In this particular form of binary tree, rebalancing ensures that, for each node in the AVL tree, the difference in height between its subtrees, known as a balance factor, is not greater than 1.

In one embodiment, a four-dimensional range tree 62, as depicted in Figure 6, is used as a data structure for storing the Euler vectors, $\xi_K$, associated with each image 30 in the database 40. The range tree 62 is four-dimensional because the Euler vector includes four features, Euler numbers $E_7$, $E_6$, $E_5$, and $E_4$. Using the Euler vector, $\xi_q$, for the query image 30q, the range tree 62 specifies a particular node. In one embodiment, the Mahalanobis distance measure 60 is performed between the query image 30q and only these images lying at the node, rather than on all images 30 of the range tree 62. The results may be ranked in descending order, such that the first distance value points to the matched image 30.

While the present invention has been described with respect to a limited number of embodiments, those skilled in the art will appreciate numerous modifications and variations therefrom. It is intended that the appended claims cover all such modifications and variations as fall within the scope of this present invention.

**Claims**

1. A computer-implemented method for similarity-based image retrieval comprising the following steps:

    characterising a plurality of gray-tone images (30) included in a database (40) using Euler vectors which are calculated by considering the most significant binary bit planes of the gray-tone images, wherein the elements of the Euler vectors are Euler numbers;
    receiving a query image (30q) including its own characterising Euler vector;
    computing a Mahalanobis distance between the query image (30q) and said plurality of images (30) from the image database (40) using the characterising Euler vectors; and
    retrieving the image from the database (40) which has the smallest of said computed distances as match for the received query image (30q).

2. The method of claim 1, wherein computing a Mahalanobis distance between the query image (30q) and said plurality of images (30) from the image database (40) further comprises:

    constructing a variance-covariance matrix using the Euler vectors of the plurality of images (30);
    selecting a first image from the plurality of images (30), the first image comprising the Euler vector; and
    computing the Mahalanobis distance between the first image and the query image (30q) using the variance-covariance matrix.

3. The method of claim 2, wherein constructing a variance-covariance matrix using the Euler vectors of the plurality of images (30) further comprises:

    computing the mean of an Euler vector element of the plurality of images (30);
    computing the variance of the Euler vector element of the plurality of images (30); and
    computing the covariance between a pair of Euler vector elements of the plurality of images (30).

**4.** The method of claim 3, further comprising:

   constructing the variance-covariance matrix from the computed variances and covariances.

**5.** The method of claim 2, wherein computing the Mahalanobis distance between the first image and the query image using the variance-covariance matrix further comprises:

   calculating the difference between the Euler vector characterising the first image and the Euler vector characterising the query image to produce a difference vector.

**6.** The method of claim 5, further comprising:

   multiplying the difference vector by an inverse of the variance-covariance matrix to produce an intermediate result; and
   multiplying the intermediate result by an inverse of the difference vector.

**7.** The method of claim 6, further comprising:

   storing the Euler vectors of the plurality of images (30) in a range tree (62).

**8.** A system (100) comprising:

   a processor (80);
   an image database (40) including plural gray-tone images (30), each of the images (30) **characterised** using an Euler vector which is calculated by considering the most significant binary bit planes of the gray-tone image (30), wherein the elements of the Euler vector are Euler numbers; and
   a machine-readable storage (70) medium comprising:

      a software program that if executed by the processor (80), is effective to receive a query image (30q) including its own characterising Euler vector, to compute a Mahalanobis distance between the query image (30q) and said plural images (30) from the database (40) using the characterising Euler vectors, and to retrieve the image from the database (40) which has the smallest of said computed distances as match for the received query image (30q).

**9.** The system (100) of claim 8, wherein the software program, if executed by the processor (80), is effective to:

   construct a variance-covariance matrix using the Euler vectors of the plural images (30) in the image database (40) .

**10.** The system (100) of claim 9, wherein the software program further computes the Mahalanobis distance by:

   computing the mean of one or more Euler vector elements of the plural images (30);
   computing the variance of one or more Euler vector elements of the plural images (30); and
   computing the covariance between pairs of Euler vector elements of the plural images (30).

**11.** The system (100) of one of claims 8 to 10, wherein the software program further computes the Mahalanobis distance by:

   calculating a difference between the Euler vector characterising a first image and the Euler vector characterising a query image to produce a difference vector; and
   calculating an inverse of the difference vector.

**12.** The system (100) of claim 11, wherein the software program further computes the Mahalanobis distance by:

   multiplying the difference vector and an inverse of the variance-covariance matrix to produce an intermediate result; and
   multiplying the intermediate result by an inverse of the difference vector.

**13.** A computer program for similarity-based image retrieval storing instructions to enable a processor-based system (100) to:

characterise a plurality of gray-tone images (30) included in a database (40) using Euler vectors which are calculated by considering the most significant binary bit planes pf the gray-tone images (30), wherein the elements of the Euler vectors are Euler numbers;
receive a query image (30q) including its own characterising Euler vector;
compute a Mahalanobis distance between the query image (30q) and said plurality of images (30) from the image database (40) using the characterising Euler vectors; and
retrieve the image from the database (40) which has the smallest of said computed distances as match for the received query image (30q).

**14.** Computer program of claim 13, further storing instructions to enable a processor-based system (100) to:

construct a variance-covariance matrix using the Euler vectors of the plurality of images (30);
select a first image from the plurality of images (30), the first image comprising the Euler vector; and
compute the Mahalanobis distance between the first image and the query image (30q) using the variance-covariance matrix.

**15.** The computer program of claim 14, further storing instructions to enable a processor-based system (100) to:

compute the mean of an Euler vector element of the plurality of images (30);
compute the variance of the Euler vector element of the plurality of images (30); and
compute the covariance between a pair of Euler vector elements of the plurality of images (30).

**16.** The computer program of claim 15, further storing instructions to enable a processor-based system (100) to:

construct the variance-covariance matrix from the computed variance and covariance.

**17.** The computer program of claim 16, further storing instructions to enable a processor-based system (100) to:

calculate the difference between the Euler vector characterising the first image and the Euler vector characterising the query image (30q) to produce a difference vector.

**18.** The computer program of claim 17, further storing instructions to enable a processor-based system (100) to:

multiply the difference vector by an inverse of the variance-covariance matrix to produce an intermediate result; and
multiply the intermediate result by an inverse of the difference vector.

**19.** The computer program of claim 18, further storing instructions to enable a processor-based system (100) to:

store the Euler vectors of the plurality of images (30) in a range tree (62).

**Patentansprüche**

**1.** Computerimplementiertes Verfahren für eine ähnlichkeitsbasierte Bildsuche, umfassend die folgenden Schritte:

Charakterisieren einer Vielzahl von in einer Datenbank (40) enthaltenen Graustufenbildern (30) unter Verwendung von Eulervektoren, die durch Berücksichtigen der höchstwertigen binären Bitebenen der Graustufenbilder berechnet werden, wobei die Elemente der Eulervektoren Eulerzahlen sind;
Empfangen eines Abfragebilds (30q), das einen eigenen charakterisierenden Eulervektor umfasst;
Berechnen des Mahalanobis-Abstands zwischen dem Abfragebild (30q) und der Vielzahl von Bildern (30) aus der Bilddatenbank (40) unter Verwendung der charakterisierenden Eulervektoren; und
Abrufen des Bilds aus der Datenbank (40), das den kleinsten der berechneten Abstände aufweist, als Treffer für das empfangene Abfragebild (30q).

**2.** Verfahren nach Anspruch 1, bei dem das Berechnen eines Mahalanobis-Abstands zwischen dem Abfragebild (30q) und der Vielzahl von Bildern (30) aus der Bilddatenbank (40) außerdem umfasst:

Aufstellen einer Varianz-Kovarianz-Matrix unter Verwendung der Eulervektoren der Vielzahl von Bildern (30);
Auswählen eines ersten Bilds aus der Vielzahl von Bildern (30), wobei das erste Bild den Eulervektor umfasst; und
Berechnen des Mahalanobis-Abstands zwischen dem ersten Bild und dem Abfragebild (30q) unter Verwendung der Varianz-Kovarianz-Matrix.

**3.** Verfahren nach Anspruch 2, bei dem das Aufstellen einer Varianz-Kovarianz-Matrix unter Verwendung der Eulervektoren der Vielzahl von Bildern (30) außerdem umfasst:

Berechnen des Mittels eines Eulervektorelements der Vielzahl von Bildern (30);
Berechnen der Varianz des Eulervektorelements der Vielzahl von Bildern (30); und
Berechnen der Kovarianz zwischen einem Paar von Eulervektorelementen der Vielzahl von Bildern (30).

**4.** Verfahren nach Anspruch 3, außerdem umfassend:

Aufstellen der Varianz-Kovarianz-Matrix aus den berechneten Varianzen und Kovarianzen.

**5.** Verfahren nach Anspruch 2, bei dem das Berechnen des Mahalanobis-Abstands zwischen dem ersten Bild und dem Abfragebild unter Verwendung der Varianz-Kovarianz-Matrix außerdem umfasst:

Berechnen des Unterschieds zwischen dem das erste Bild charakterisierenden Eulervektor und dem das Abfragebild charakterisierenden Eulervektor zum Erzeugen eines Unterschiedsvektors.

**6.** Verfahren nach Anspruch 5, außerdem umfassend:

Multiplizieren des Unterschiedsvektors mit einer Inversen der Varianz-Kovarianz-Matrix, um ein Zwischenergebnis zu erzeugen; und
Multiplizieren des Zwischenergebnisses mit einem inversen Vektor des Unterschiedsvektors.

**7.** Verfahren nach Anspruch 6, außerdem umfassend:

Speichern der Eulervektoren der Vielzahl von Bildern (30) in einem Bereichsbaum (62).

**8.** System (100), umfassend:

einen Prozessor (80);
eine Bilddatenbank (40), die eine Mehrzahl von Graustufenbildern (30) umfasst, wobei jedes der Bilder unter Verwendung eines durch Berücksichtigen der höchstwertigen binären Bitebenen des Graustufenbilds (30) berechneten Eulervektors charakterisiert ist, wobei die Elemente des Eulervektors Eulerzahlen sind; und
ein maschinenlesbares Speichermedium (70), umfassend:

ein Softwareprogramm, das, wenn es vom Prozessor (80) ausgeführt wird, das Empfangen eines einen eigenen charakterisierenden Eulervektor umfassenden Abfragebilds (30q), das Berechnen des Mahalano-bis-Abstands zwischen dem Abfragebild (30q) und der Mehrzahl von Bildern (30) aus der Datenbank (40) unter Verwendung der charakterisierenden Eulervektoren, und das Abrufen des Bilds aus der Datenbank (40), das den kleinsten der berechneten Abstände aufweist, als einen Treffer für das empfangene Abfragebild (30q) bewirkt.

**9.** System (100) nach Anspruch 8, bei dem das Softwareprogramm, wenn es vom Prozessor (80) ausgeführt wird, das Aufstellen einer Varianz-Kovarianz-Matrix unter Verwendung der Eulervektoren der Mehrzahl von Bildern (30) in der Bilddatenbank (40) bewirkt.

**10.** System (100) nach Anspruch 9, bei dem das Softwareprogramm außerdem den Mahalanobis-Abstand berechnet durch:

Berechnen des Mittels eines oder mehrerer Eulervektorelemente der Mehrzahl von Bildern (30);

Berechnen der Varianz eines oder mehrerer Eulervektorelemente der Mehrzahl von Bildern (30); und
Berechnen der Kovarianz zwischen Paaren von Eulervektorelementen der Mehrzahl von Bildern (30).

11. System (100) nach einem der Ansprüche 8 bis 10, bei dem das Softwareprogramm außerdem den Mahalanobis-Abstand berechnet durch:

Berechnen eines Unterschieds zwischen dem Eulervektor, der ein erstes Bild charakterisert, und dem Eulervektor, der ein Abfragebild charakterisiert, um einen Unterschiedsvektor zu erzeugen; und
Berechnen eines inversen Vektors des Unterschiedsvektors.

12. System (100) nach Anspruch 11, bei dem das Softwareprogramm außerdem den Mahalanobis-Abstand berechnet durch:

Multiplizieren des Unterschiedsvektors und einer Inversen der Varianz-Kovarianz-Matrix zum Erzeugen eines Zwischenergebnisses; und
Multiplizieren des Zwischenergebnisses mit einem inversen Vektor des Unterschiedsvektors.

13. Computerprogramm für eine ähnlichkeitsbasierte Bildsuche, das Befehle umfasst, welche einem prozessor-basierten System (100) ermöglichen,
eine Vielzahl von in einer Datenbank (40) enthaltenen Graustufenbildern (30) unter Verwendung von Eulervektoren zu charakterisieren, die durch Berücksichtigen der höchstwertigen binären Bitebenen der Graustufenbilder (30) berechnet werden, wobei die Elemente der Eulervektoren Eulerzahlen sind;
ein Abfragebild (30q) zu empfangen, das einen eigenen charakterisierenden Eulervektor umfasst;
den Mahalanobis-Abstand zwischen dem Abfragebild (30q) und der Vielzahl von Bildern (30) aus der Bilddatenbank (40) unter Verwendung der charakterisierenden Eulervektoren zu berechnen; und
das Bild, das den kleinsten der berechneten Abstände hat, als Treffer für das Abfragebild (30q) aus der Datenbank (40) zu abzurufen.

14. Computerprogramm nach Anspruch 13, das außerdem Befehle speichert, welche einem prozessor-basierten System (100) ermöglichen,
eine Varianz-Kovarianz-Matrix unter Verwendung der Eulervektoren der Vielzahl von Bildern (30) aufzustellen;
ein erstes Bild aus der Vielzahl von Bildern (30) auszuwählen, wobei das erste Bild den Eulervektor umfasst; und
den Mahalanobis-Abstand zwischen dem ersten Bild und dem Abfragebild (30q) unter Verwendung der Varianz-Kovarianz-Matrix zu berechnen.

15. Computerprogramm nach Anspruch 14, das außerdem Befehle speichert, welche einem prozessor-basierten System (100) ermöglichen,
das Mittel eines Eulervektorelements der Vielzahl von Bildern (30) zu berechnen;
die Varianz des Eulervektorelements der Vielzahl von Bildern (30) zu berechnen; und
die Kovarianz zwischen einem Paar von Eulervektorelementen der Vielzahl von Bildern (30) zu berechnen.

16. Computerprogramm nach Anspruch 15, das außerdem Befehle speichert, welche einem prozessor-basierten System (100) ermöglichen,
die Varianz-Kovarianz-Matrix aus der berechneten Varianz und Kovarianz aufzustellen.

17. Computerprogramm nach Anspruch 16, das außerdem Befehle speichert, welche einem prozessor-basierten System (100) ermöglichen,
den Unterschied zwischen dem das erste Bild charakterisierenden Eulervektor und dem das Abfragebild (30q) charakterisierenden Eulervektor zu berechnen, um einen Unterschiedsvektor zu erzeugen.

18. Computerprogramm nach Anspruch 17, das außerdem Befehle speichert, welche einem prozessor-basierten System (100) ermöglichen,
den Unterschiedsvektor mit einer Inversen der Varianz-Kovarianz-Matrix zu multiplizieren, um ein Zwischenergebnis zu erzeugen; und
das Zwischenergebnis mit einem inversen Vektor des Unterschiedsvektors zu multiplizieren.

19. Computerprogramm nach Anspruch 18, das außerdem Befehle speichert, welche einem prozessor-basierten System (100) ermöglichen,

die Eulervektoren der Vielzahl von Bildern (30) in einem Bereichsbaum (62) zu speichern.

**Revendications**

1. Procédé implémenté par ordinateur pour une recherche d'image sur la base d'une similarité comprenant les étapes suivantes :
   caractériser une pluralité d'images en niveaux de gris (30) incluses dans une base de données (40) en utilisant les vecteurs d'Euler qui sont calculés en considérant les plans de bits binaires les plus significatifs des images en niveaux de gris, dans lequel les éléments des vecteurs d'Euler sont des nombres d'Euler ;
   recevoir une image à interroger (30q) incluant son propre vecteur d'Euler caractéristique ;
   calculer une distance de Mahalanobis entre l'image à interroger (30q) et ladite pluralité d'images (30) de la base de données d'images (40) en utilisant les vecteurs d'Euler caractéristiques ; et
   rechercher l'image dans la base de données (40) qui a la plus petite distance desdites distances calculées comme étant la correspondance pour l'image à interroger reçue (30q).

2. Procédé selon la revendication 1, dans lequel le calcul d'une distance de Mahalanobis entre l'image à interroger (30q) et ladite pluralité d'images (30) de la base de données (40) comprend, en outre, les étapes consistant à :

   construire une matrice de variance - covariance en utilisant les vecteurs d'Euler de la pluralité d'images (30) ;
   sélectionner une première image parmi la pluralité d'images (30), la première image comprenant le vecteur d'Euler ; et
   calculer la distance de Mahalanobis entre la première image et l'image à interroger (30q) en utilisant la matrice de variance - covariance.

3. Procédé selon la revendication 2, dans lequel la construction d'une matrice de variance - covariance en utilisant les vecteurs d'Euler de la pluralité d'images (30) comprend en outre les étapes consistant à :

   calculer la moyenne d'un élément des vecteurs d'Euler de la pluralité d'images (30) ;
   calculer la variance de l'élément des vecteurs d'Euler de la pluralité d'images (30) ; et
   calculer la covariance entre une paire d'éléments des vecteurs d'Euler de la pluralité d'images (30).

4. Procédé selon la revendication 3, comprenant, en outre, l'étape consistant à :

   construire la matrice de variance - covariance à partir des variances et des covariances calculées.

5. Procédé selon la revendication 2, dans lequel le calcul de la distance de Mahalanobis entre la première image et l'image à interroger en utilisant la matrice de variance - covariance comprend, en outre, l'étape consistant à :

   calculer la différence entre le vecteur d'Euler caractérisant la première image et le vecteur d'Euler caractérisant l'image à interroger pour produire un vecteur de différence.

6. Procédé selon la revendication 5, comprenant, en outre, les étapes consistant à :

   multiplier le vecteur de différence par un inverse de la matrice de variance - covariance pour produire un résultat intermédiaire ; et
   multiplier le résultat intermédiaire par un inverse du vecteur de différence.

7. Procédé selon la revendication 6, comprenant, en outre, l'étape consistant à :

   stocker les vecteurs d'Euler de la pluralité d'images (30) dans un arbre de rangement (62).

8. Système (100) comprenant :

   un processeur (80) ;
   une base de données d'images (40) incluant de multiples images en niveaux de gris (30), chacune des images (30) étant **caractérisée en** utilisant un vecteur d'Euler qui est calculé en considérant les plans de bits binaires les plus significatifs de l'image en niveaux de gris (30), dans lequel les éléments du vecteur d'Euler sont des nombres d'Euler ; et

un support de stockage lisible par une machine (70) comprenant:

> un programme logiciel qui, s'il est exécuté par le processeur (80), est efficace pour recevoir une image à interroger (30q) incluant son propre vecteur d'Euler caractéristique, pour calculer une distance de Mahalanobis entre l'image à interroger (30q) et lesdites multiples images (30) de la base de données (40) en utilisant les vecteurs d'Euler caractéristiques, et pour rechercher l'image dans la base de données (40) qui a la plus petite distance desdites distances calculées comme étant la correspondance pour l'image à interroger reçue (30q).

9. Système (100) selon la revendication 8, dans lequel le programme logiciel, s'il est exécuté par le processeur (80) est efficace pour :

> construire une matrice de variance - covariance en utilisant les vecteurs d'Euler des multiples images dans la base de données d'images (40).

10. Système (100) selon la revendication 9, dans lequel le programme logiciel calcule, en outre, la distance de Mahalanobis en :

> calculant la moyenne d'un ou de davantage d'éléments des vecteurs d'Euler des multiples images (30) ;
> calculant la variance d'un ou de davantage d'éléments des vecteurs d'Euler des multiples images (30) ; et en
> calculant la covariance entre des paires d'éléments des vecteurs d'Euler des multiples images (30).

11. Système (100) selon l'une des revendications 8 à 10, dans lequel le programme logiciel calcule, en outre, la distance de Mahalanobis en:

> calculant une différence entre le vecteur d'Euler caractérisant une première image et le vecteur d'Euler d'image caractérisant une image à interroger pour produire un vecteur de différence ; et en
> calculant un inverse du vecteur de différence.

12. Système (100) selon la revendication 11, dans lequel le programme logiciel calcule, en outre, la distance de Mahalanobis en :

> multipliant le vecteur de différence et un inverse de la matrice de variance - covariance pour produire un résultat intermédiaire ; et en
> multipliant le résultat intermédiaire par un inverse du vecteur de différence.

13. Programme informatique pour une recherche d'image sur la base d'une similarité stockant des instructions pour permettre qu'un système sur la base d'un processeur (100)
caractérise une pluralité d'images en niveaux de gris (30) incluses dans une base de données (40) en utilisant les vecteurs d'Euler qui sont calculés en considérant les plans de bits binaires les plus significatifs pf des images en niveaux de gris (30), dans lequel les éléments des vecteurs d'Euler sont des nombres d'Euler ;
reçoive une image à interroger (30q) incluant son propre vecteur d'Euler caractéristique ;
calcule une distance de Mahalanobis entre l'image à interroger (30q) et ladite pluralité d'images (30) de la base de données d'images (40) en utilisant les vecteurs d'Euler caractéristiques ; et
recherche l'image dans la base de données (40) qui a la plus petite distance desdites distances calculées comme étant la correspondance pour l'image à interroger reçue (30q).

14. Programme informatique selon la revendication 13, stockant, en outre, des instructions pour permettre qu'un système sur la base d'un processeur (100) :

> construise une matrice de variance - covariance en utilisant les vecteurs d'Euler de la pluralité d'images (30) ;
> sélectionne une première image parmi la pluralité d'images (30), la première image comprenant le vecteur d'Euler ; et
> calcule la distance de Mahalanobis entre la première image et l'image à interroger (30q) en utilisant la matrice de variance - covariance.

15. Programme informatique selon la revendication 14, stockant, en outre, des instructions pour permettre qu'un système sur la base d'un processeur (100) :

calcule la moyenne d'un élément des vecteurs d'Euler de la pluralité d'images (30) ;
calcule la variance de l'élément des vecteurs d'Euler de la pluralité d'images (30) ; et
calcule la covariance entre une paire d'éléments des vecteurs d'Euler de la pluralité d'images (30).

**16.** Programme informatique selon la revendication 15, stockant, en outre, des instructions pour permettre qu'un système sur la base d'un processeur (100) :

construise la matrice de variance - covariance à partir de la variances et de la covariance calculées.

**17.** Programme informatique selon la revendication 16, stockant, en outre, des instructions pour permettre qu'un système sur la base d'un processeur (100) :

calcule la différence entre le vecteur d'Euler caractérisant la première image et le vecteur d'Euler caractérisant l'image à interroger (30q) pour produire un vecteur de différence.

**18.** Programme informatique selon la revendication 17, stockant, en outre, des instructions pour permettre qu'un système sur la base d'un processeur (100) :

multiplie le vecteur de différence par un inverse de la matrice de variance - covariance pour produire un résultat intermédiaire ; et
multiplie le résultat intermédiaire par un inverse du vecteur de différence.

**19.** Programme informatique selon la revendication 18, stockant, en outre, des instructions pour permettre qu'un système sur la base d'un processeur (100) :

stocke les vecteurs d'Euler de la pluralité d'images (30) dans un arbre de rangement (62).

# Figure 1

N x M pixel matrix

# Figure 2

N x M pixel matrix

# Figure 3

N

0 1 2 3 4 5 6 7 8 9 10 11   22

22a

36

22b

M

22c

20

N x M pixel matrix

b7 b6 b5 b4 b3 b2 b1 b0

■ = 0 0 1 1 0 0 0 0b = 48d

▨ = 0 1 0 0 1 0 1 1b = 75d

▢ = 1 1 1 0 1 0 0 0b = 232d

# Figure 6

100

```
┌─────────────────────────────────────────────────┐
│                                          80       │
│            ┌─────────────────┐                    │
│            │   processor     │                    │
│            └─────────────────┘                    │
│                                        40         │
│   ┌─────────────────────────────────────────┐    │
│   │  30a     30b     30c          30j        │    │
│   │  ┌───┐  ┌───┐  ┌───┐        ┌───┐        │    │
│   │  │ Eₐ│  │ E♭│  │ E_c│  ● ● ●│ E_j│        │    │
│   │  └───┘  └───┘  └───┘        └───┘        │    │
│   │          image database                  │    │
│   └─────────────────────────────────────────┘    │
│                       ⇩                           │
│        70    ┌──────────────────┐  60             │
│              │                  │                 │
│  30q         │   Mahalanobis    │   ┌──────────┐  │
│  ┌───┐ ⇨     │   distance       │ ⇨ │ d(E_q,Eₐ)│  │
│  │ E_q│      │   measure        │   │ d(E_q,E♭)│  │
│  └───┘       │                  │   │ d(E_q,E_c)│ │
│              └──────────────────┘   │    ●      │  │
│            62  ┌──────────────┐     │    ●      │  │
│              │  range tree  │       │    ●      │  │
│              └──────────────┘       │ d(E_q,E_j)│  │
│                   storage           └──────────┘  │
│                    system        50               │
└─────────────────────────────────────────────────┘
```

# Figure 7

```
                                            200
                                          /
                    ⬡ begin ⬡

                                            202
            ┌─────────────────────┐       /
            │  compute the mean of │
            │   each feature in the│
            │      database        │
            └─────────────────────┘

                                            204
            ┌─────────────────────┐       /
            │  compute the variance│
            │  of each feature in the│
            │      database        │
            └─────────────────────┘

            ┌─────────────────────┐    206
            │compute the covariance among│ /
            │each pair of feature vectors, $x_i$│
            │      and $x_j$, $i \neq j$      │
            └─────────────────────┘

            ┌─────────────────────┐    208
            │    construct the     │   /
            │ variance-covariance matrix│
            │ from the computed variances│
            │   and covariances    │
            └─────────────────────┘

                    ⬡ done ⬡
```

# Figure 8

300

begin

calculate the difference
between vectors x and y
(x-y) and its transpose (x-y)'

302

calculate the inverse of the
variance-covariance matrix
$M_{vc}^{-1}$

304

compute the Mahalanobis
distance:

$$d(\mathbf{x}, \mathbf{y}) = \sqrt{[(\mathbf{x} - \mathbf{y})' * M_{vc}^{-1} * (\mathbf{x} - \mathbf{y})]}$$

306

done

Figure 5A

Figure 5B

= 0

= 1

28a

32a

28b

32b

Figure 5C

28c

32c

Figure 5D

28d

32d

EP 1 370 983 B1

Figure 4A

Figure 4B

Figure 4C

Figure 4D

■ = 0

□ = 1

EP 1 370 983 B1

## REFERENCES CITED IN THE DESCRIPTION

### Patent documents cited in the description

- US 6104833 A

- US 5642431 A

### Non-patent literature cited in the description

- A handwritten character recognition system using directional element feature and asymmetric Mahalanobis distance. **KATO et al.** IEEE transactions on pattern analysis and machine intelligence. IEEE Inc, March 1999, vol. 21, 258-262
- A handwritten character recognition system using modified Mahalanobis distance. **KATO et al.** Systems&computers in Japan. Scripta technical journals, 1997, vol. 28, 46-54
- New techniques for exact and approximate dynamic closest-point problems. **KAPOOR et al.** Proceedings of the tenth annual symposium on computational geometry. Stony Brook, NY, 08 June 1994, 165-174

- Query by image and video content: The QBIC system. **FLICKNER et al.** Computer. IEEE Computer Society, Long Beach, CA, 01 September 1995, vol. 28, 23-32
- The QBIC project: Qerying images by content using color, texture, and shape. **NIBLACK et al.** Proceedings of the Spie. Spie, 1993, vol. 1908, 173-187
- The Mahalanobis distance. **DE MAESSCHALCK et al.** Chemometrics and intelligent laboratory systems. Elsevier Science Publishers, January 2000, vol. 50, 1-18
- A fast algorithm for computing the Euler number of an image and its VLSI implementation. **DEY et al.** Thirteenth international conference on VLSI design. IEEE, 03 January 2000, 330-335